# FASCICULE DE BREVET EUROPEEN

(11) **EP 1 521 271 B1**
(45) Date de publication et mention de la délivrance du brevet: **10.05.2006**
(21) Numéro de dépôt: 03292424.3
(22) Date de dépôt: 01.10.2003
(51) Int. Cl.: G21C 3/326

(54) **Assemblage pour réacteur nucléaire à eau sous pression comprenant des crayons à deux teneurs en gadolinium**
Brennstabbündel für einen Druckwasserkernreaktor mit Brennstäben mit zwei Gadoliniumgehalten
Fuel assembly for a pressurized water nuclear reactor with rods having two gadolinium contents

(43) Date de publication de la demande: 06.04.2005
(73) Titulaire: Framatome ANP, 92400 Courbevoie (FR)
(72) Inventeur: Belvegue,Patrice, 38440 SAINTE ANNE SUR GERVONDE (FR); Zheng,Songhui, 69003 LYON (FR)
(74) Mandataire: Domenego, Bertrand

(56) Documents cités:
- EP-A- 0 155 865
- WO-A-96/20484
- PATENT ABSTRACTS OF JAPAN vol. 2000, no. 09, 13 octobre 2000 (2000-10-13) & JP 2000 180575 A (NUCLEAR FUEL IND LTD), 30 juin 2000 (2000-06-30)
- PATENT ABSTRACTS OF JAPAN vol. 2000, no. 13, 5 février 2001 (2001-02-05) & JP 2000 284081 A (HITACHI LTD), 13 octobre 2000 (2000-10-13)

## Description

La présente invention concerne un assemblage combustible pour réacteur nucléaire à eau sous pression, comprenant des premiers crayons de combustible nucléaire ayant une première teneur massique en gadolinium et des deuxièmes crayons de combustible nucléaire ayant une deuxième teneur massique en gadolinium, la deuxième teneur étant supérieure à la première teneur.

Le gadolinium est un poison neutronique qui, utilisé dans les assemblages de combustible nucléaire, remplit deux rôles.

D'une part, il permet de réduire la réactivité initiale du coeur après un rechargement partiel ou total en assemblages combustible neufs, du fait de son absorption de neutrons. La disparition progressive du gadolinium compense l'épuisement progressif du combustible.

D'autre part, grâce à une répartition appropriée des assemblages combustible contenant du gadolinium dans le coeur du réacteur nucléaire, il permet d'arriver à une répartition radiale plus régulière de la puissance, et cela pendant tout un cycle de fonctionnement du coeur avant rechargement.

Initialement, on a utilisé des assemblages de combustible nucléaire dont les, crayons empoisonnés avaient une même teneur massique en oxyde de gadolinium (Gd₂O₃), généralement comprise entre 5 et 12%.

Toutefois, il s'est avéré que de tels assemblages ne permettaient pas d'arriver à une gestion satisfaisante des coeurs pour des durées élevées de cycle d'utilisation, notamment supérieures à 18 ou 24 mois.

Le document EP-799 484 a alors proposé un assemblage à deux teneurs massiques en oxyde de gadolinium. Ce document utilisait la constatation que l'anti-réactivité initiale apportée par le gadolinium n'était pas proportionnelle à sa teneur, mais augmentait beaucoup moins vite avec la teneur dès que l'on dépassait une teneur de 1% environ.

Ce document enseignait donc d'utiliser des premiers crayons avec une première teneur massique en oxyde de gadolinium comprise entre 0,5 et 2% et des deuxième crayons avec une deuxième teneur massique comprise entre 5 et 12%. Les premiers crayons permettaient de réduire de manière suffisante la réactivité initiale. En outre, du fait de leur faible teneur, leur anti-réactivité diminuait très rapidement à partir du début de cycle du réacteur, de sorte que les premiers crayons ne nuisaient pas à la distribution radiale de puissance pour le reste du cycle, cette distribution pouvant alors être contrôlée par les deuxième crayons empoisonnés.

Cependant, on a constaté que de tels assemblages combustibles ne permettaient pas une gestion totalement satisfaisante des coeurs à cycle d'utilisation particulièrement longs.

En particulier, ces assemblages conduisent à des coefficients négatifs de température du modérateur qui sont, en valeur absolue, trop faibles.

On rappelle que ce coefficient mesure l'augmentation de la capacité du modérateur, c'est-à-dire de l'eau de réfrigération circulant dans le circuit primaire du réacteur, à absorber des neutrons lorsque la température augmente dans le coeur. Ce coefficient mesure en quelque sorte la capacité du coeur à s'arrêter lui-même.

En outre, on a pu constater que le facteur de pic puissance radiale Fxy pouvait remonter en cours de cycle au-delà de sa valeur initiale, c'est-à-dire en début de cycle.

On rappelle que le facteur de pic de puissance radiale Fxy est le rapport entre la puissance maximale émise par un crayon dans le coeur et la puissance moyenne émise par les crayons du coeur. Ce facteur mesure le déséquilibre de puissance existant entre les crayons du coeur.

De telles remontées du facteur Fxy au-delà de sa valeur initiale compliquent les contraintes de gestion des exploitants des réacteurs qui, pour plus de confort, souhaiteraient que le déséquilibre maximal soit atteint en début de cycle.

Un but de l'invention est de résoudre ces problèmes en permettant une gestion plus sûre et plus simple des coeurs des réacteurs nucléaires à eau sous pression.

A cet effet, l'invention a pour objet un assemblage combustible pour réacteur nucléaire à eau sous pression, comprenant des premiers crayons de combustible nucléaire ayant une première teneur massique en gadolinium et des deuxièmes crayons de combustible nucléaire ayant une deuxième teneur massique en gadolinium, la deuxième teneur étant supérieure à la première teneur, caractérisé en ce que la première teneur massique est strictement supérieure à 2%.

Selon des modes particuliers de réalisation, l'assemblage peut comprendre l'une ou plusieurs des caractéristiques suivantes, prise(s), isolément ou selon toutes les combinaisons techniquement possibles :
- la première teneur massique est supérieure ou égale à 2,1%,
- la première teneur massique est supérieure ou égale à 2,2%,
- la première teneur massique est supérieure ou égale à 2,5%,
- la première teneur massique est supérieure ou égale à 3%,
- la première teneur massique est supérieure ou égale à 4%,
- la première teneur massique est supérieure ou égale à 5%, et
- la première teneur massique est inférieure ou égale à 8%.

L'invention sera mieux comprise à la lecture de la description qui va suivre, donnée uniquement à titre d'exemple, et faite en se référant aux dessins annexés :
- la figure 1 est une vue schématique en plan montrant la répartition des crayons de combustible dans un premier type d'assemblage selon l'invention,
- la figure 2 montre la variation de l'anti-réactivité d'un crayon en fonction de sa teneur en gadolinium dans deux assemblages ayant respectivement du combustible oxyde enrichi à 4,50% d'uranium 235 (courbe en trait plein) et à 3,90% (courbe en tirets),
- la figure 3 est une vue analogue à la figure 1 illustrant un deuxième type d'assemblage selon l'invention, et
- la figure 4 est un schéma montrant une répartition possible des assemblages des figures 1 et 3 dans un quart du coeur d'un réacteur nucléaire.

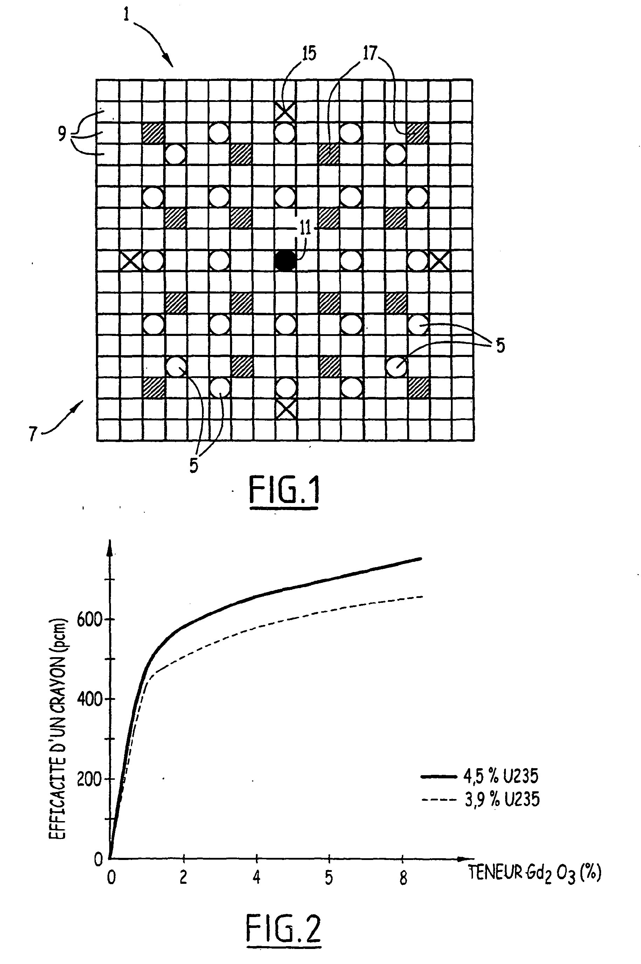

La figure 1 illustre un premier type d'assemblage 1 pour un réacteur nucléaire à eau pressurisée (REP).

La structure générale de cet assemblage 1 est classique et ne sera donc pas décrite en détail. On rappellera simplement que l'assemblage 1 comprend des crayons de combustible nucléaire et un squelette de support et de maintien de ces crayons de combustible nucléaire aux noeuds d'un réseau régulier, typiquement à base carrée.

Le squelette comprend un embout inférieur, un embout supérieur et des tubes guides 5 qui relient ces deux embouts et qui sont destinés à recevoir les crayons d'une grappe de contrôle du fonctionnement du coeur du réacteur nucléaire.

Le squelette comprend en outre des grilles 7 de maintien des crayons de combustible nucléaire. Ces grilles 7 comprennent classiquement des jeux de plaquettes entrecroisées qui délimitent entre elles des cellules 9 centrées sur les noeuds du réseau régulier. Chaque cellule 9 est destinée à recevoir un crayon combustible, dont la plupart n'ont pas été représentées sur la figure 1, ou un tube guide 5 , la cellule centrale 9 recevant quant à elle un tube d'instrumentation 11.

Dans l'exemple de la figure 1, les grilles de maintien 7 comprennent 17 cellules 9 par côté. Dans d'autres variantes, le nombre de cellules peut être différent, par exemple de 14x14 ou de 15x15.

Les cellules 9 qui sont représentées vides sur la figure 1 contiennent en fait des crayons de combustible nucléaire sans gadolinium. Typiquement, ces crayons de combustible contiennent de l'oxyde d'uranium enrichi en isotope 235 à 2,5% en masse.

L'assemblage combustible 1 comprend, en plus de ces crayons de combustible non-empoisonnés, des crayons de combustible nucléaire empoisonnés.

Plus précisément, il comprend 4 premiers crayons 15 à une première teneur massique en oxyde de gadolinium et 16 deuxièmes crayons 17 à une deuxième teneur massique en oxyde de gadolinium, plus élevée que la première teneur. Les premiers crayons 15 sont repérés par des croix et les deuxièmes crayons par des hachures.

Comme exposé dans le brevet EP-799 484, et comme rappelé par la figure 2 jointe, l'efficacité initiale d'un crayon comprenant du gadolinium n'évolue pas de manière linéaire avec la valeur numérique de sa teneur massique en oxyde de gadolinium.

On voit par exemple sur la figure 2 que, pour un crayon d'enrichissement initial en uranium 235 de 4,50%, l'anti-réactivité apportée par 1% de gadolinium est d'un peu plus de 500 pcm (partie par cent mille) alors que l'anti-réactivité apportée par 8% de gadolinium n'est que de 750 pcm environ. Une réduction de la teneur initiale en gadolinium dans un rapport de 8 à 1 ne se traduit donc que par une réduction de l'anti-réactivité dans un rapport de 1,5 à 1 environ. La courbe en tirets montre que c'est également le cas pour un enrichissement de 3,9 % en uranium 235. Un tel comportement peut également être observé avec des enrichissements en uranium 235 différents, par exemple avec des teneurs en uranium 235 de 2,5%.

C'est pour cela que le document EP-799 484 enseignait d'utiliser une première teneur massique de gadolinium inférieure à 2%.

Contrairement à cet enseignement, la première teneur en oxyde de gadolinium (Gd₂O₃) est ici de 5% en masse et la deuxième teneur de 10% en masse. Les crayons 15 et 17 ont par ailleurs un enrichissement en uranium 235 de 2,5% en masse.

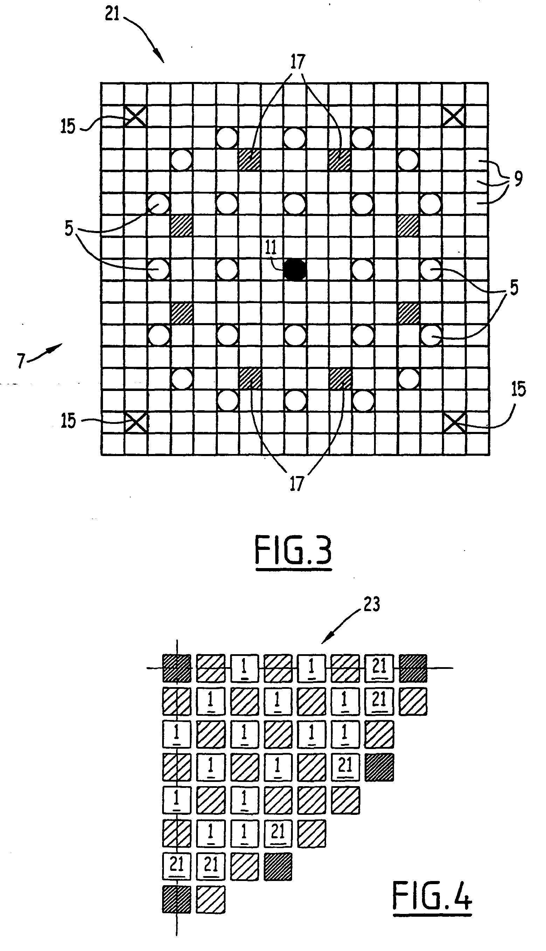

Des simulations numériques ont démontré que l'assemblage 1 de la figure 1 permet une gestion plus simple et plus sûre d'un coeur de réacteur nucléaire. Pour cela, on a simulé le fonctionnement d'un coeur chargé avec des assemblages 1 du premier type, ainsi qu'avec des assemblages 21 d'un deuxième type illustré par la figure 3.

Ces assemblages 21 comprennent, à la différence des assemblages 1 du premier type, uniquement 8 crayons 17. La répartition des crayons 15 et 17 dans les assemblages 21 est illustrée par la figure 3.

La figure 4 illustre un quart du coeur 23 du réacteur nucléaire dont on rappellera qu'il présente une symétrie d'ordre 4. Les deux axes de symétrie apparaissent en traits mixtes sur la figure 4.

Ainsi, la structure totale du coeur 23 peut être déduite de la seule figure 4.

Les carrés blancs représentent les assemblages renouvelés en début de cycle et qui sont des assemblages 1 du premier type et des assemblages 21 du deuxième type. On remarquera que les assemblages 21 sont disposés à la périphérie du coeur. Au total, le coeur 23 comprend 52 assemblages 1 et 20 assemblages 21.

Les carrés faiblement hachurés représentent les assemblages qui ont déjà subi un cycle et qui vont débuter leur deuxième cycle.

Les carrés plus fortement hachurés correspondent aux assemblages qui ont déjà subi deux cycles et qui vont subir leur troisième et dernier cycle.

Le coeur 23 permet de mener un cycle relativement long, typiquement d'une longueur d'environ 488 jepp (jour équivalent pleine puissance).

Au début du cycle, le facteur de pic de puissance radiale Fxy a une valeur d'environ 1,465 et le coefficient de température du modérateur est de - 3,7 pcm/°C.

La valeur initiale du facteur Fxy est donc particulièrement élevée, et notamment plus qu'avec des assemblages conformes à l'enseignement de EP-799 484.

En outre, la durée nécessaire pour épuiser en gadolinium les premiers crayons 15 est plus élevée que dans le cas du brevet EP-799 484.

Ainsi, la remontée du facteur Fxy au cours du cycle se produira plus tardivement et aura une amplitude, par rapport à la valeur initiale de facteur de pic de puissance radiale Fxy, beaucoup plus faible.

Ces deux effets sont dûs à une première teneur dans les premiers crayons 15 strictement supérieure à 2%, qui permet notamment de bénéficier d'un empoisonnement par les premiers crayons 15 relativement long.

Ainsi, l'exploitation du coeur 23 est plus simple puisque la valeur maximale du facteur de pic de puissance radiale Fxy apparaît de manière plus certaine en début de cycle.

De même, le coefficient de température du modérateur est très faible, c'est-à-dire qu'il possède une valeur absolue élevée, ce qui garantit une sécurité accrue dans le fonctionnement du coeur 23, sans nécessiter une concentration initiale en bore élevée dans le réfrigérant circulant dans le circuit primaire.

De manière plus générale, l'invention peut être mise en oeuvre en utilisant comme première teneur massique en oxyde de gadolinium (Gd₂O₃) des valeurs strictement supérieures à 2%, par exemple de 2,1%, 2,2%, 2,5%, 3%, 4%, 5%, 6%, 7%, 8%, voire plus.

On a constaté que les meilleurs résultats étaient obtenus avec des valeurs comprises entre 4 et 6%.

La deuxième teneur en oxyde de gadolinium (Gd₂O₃), qui est supérieure à la première teneur, peut quant à elle être par exemple comprise entre 5 et 15%. Elle peut ainsi être de 5, 6, 7, 8, 9, 10, 11, 12, 13, 14 ou 15%.

Les nombres de crayons 15 et 17 peuvent également être différents de ceux décrits précédemment. Ainsi on peut utiliser, par exemple, des assemblages 1 comprenant 8 crayons 15 et 12 crayons 17, des assemblages 21 avec 8 crayons 15 et 8 crayons 17, éventuellement avec d'autres assemblages avec 8 crayons 15 et 4 crayons 17.

De manière générale, le nombre et la disposition des assemblages comprenant du gadolinium dans le coeur 23 peut être différente de celle représentée sur la figure 4.

De même, la teneur en uranium 235 des crayons 15 et 17 contenant du gadolinium peut être différente de celle des crayons n'en contenant pas, et être par exemple inférieure à celle-ci.

Dé manière plus générale, le combustible nucléaire peut comprendre de l'oxyde d'uranium enrichi en isotope 235 et/ou en plutonium.

## Revendications

1. Assemblage de combustible (1, 21) pour réacteur nucléaire à eau sous pression, comprenant des premiers crayons (15) de combustible nucléaire ayant une première teneur massique en gadolinium et des deuxièmes crayons de combustible nucléaire (17) ayant une deuxième teneur massique en gadolinium, la deuxième teneur étant supérieure à la première teneur, **caractérisé en ce que** la première teneur massique est strictement supérieure à 2%.

2. Assemblage selon la revendication 1, **caractérisé en ce que** la première teneur massique est supérieure ou égale à 2,1 %.

3. Assemblage selon la revendication 2, **caractérisé en ce que** la première teneur massique est supérieure ou égale à 2,2%.

4. Assemblage selon la revendication 3, **caractérisé en ce que** la première teneur massique est supérieure ou égale à 2,5%.

5. Assemblage selon la revendication 4, **caractérisé en ce que** la première teneur massique est supérieure ou égale à 3%.

6. Assemblage selon la revendication 5, **caractérisé en ce que** la première teneur massique est supérieure ou égale à 4%.

7. Assemblage selon la revendication 6, **caractérisé en ce que** la première teneur massique est supérieure ou égale à 5%.

8. Assemblage selon l'une des revendications précédentes, **caractérisé en ce que** la première teneur massique est inférieure ou égale à 8%.

## Patentansprüche

1. Brennelement-Bündel (Brennstoffkassette) (1, 21) für einen Druckwasser-Reaktor, das (die) umfasst erste Kernbrennelemente (Brennstäbe) (15) mit einem ersten Massengehalt an Gadolinium und zweite Kernbrennelemente (Brennstäbe) (17) mit einem zweiten Massengehalt an Gadolinium, wobei der zweite Gehalt höher ist als der erste Gehalt,
**dadurch gekennzeichnet, dass** der erste Massengehalt stets oberhalb 2 % liegt.

2. Brennelement-Bündel nach Anspruch 1, **dadurch gekennzeichnet, dass** der erste Massengehalt ≥ 2,1 % ist.

3. Brennelement-Bündel nach Anspruch 2, **dadurch gekennzeichnet, dass** der erste Massengehalt ≥ 2,2 % ist.

4. Brennelement-Bündel nach Anspruch 3, **dadurch gekennzeichnet, dass** der erste Massengehalt ≥ 2,5 % ist.

5. Brennelement-Bündel nach Anspruch 4, **dadurch gekennzeichnet, dass** der erste Massengehalt ≥ 3 % ist.

6. Brennelement-Bündel nach Anspruch 5, **dadurch gekennzeichnet, dass** der erste Massengehalt ≥ 4 % ist.

7. Brennelement-Bündel nach Anspruch 6, **dadurch gekennzeichnet, dass** der erste Massengehalt ≥ 5 % ist.

8. Brennelement-Bündel nach einem der vorhergehenden Ansprüche, **dadurch gekennzeichnet, dass** der erste Massengehalt ≤ 8 % ist.

## Claims

1. Fuel assembly (1, 21) for a pressurised water nuclear reactor, comprising first nuclear fuel rods (15) having a first content by mass of gadolinium and second nuclear fuel rods (17) having a second content by mass of gadolinium, the second content being greater than the first content, **characterised in that** the first content by mass is always greater than 2%.

2. Assembly according to claim 1, **characterised in that** the first content by mass is greater than or equal to 2.1 %.

3. Assembly according to claim 2, **characterised in that** the first content by mass is greater than or equal to 2.2%.

4. Assembly according to claim 3, **characterised in that** the first content by mass is greater than or equal to 2.5%.

5. Assembly according to claim 4, **characterised in that** the first content by mass is greater than or equal to 3%.

6. Assembly according to claim 5, **characterised in that** the first content by mass is greater than or equal to 4%.

7. Assembly according to claim 6, **characterised in that** the first content by mass is greater than or equal to 5%.

8. Assembly according to one of the preceding claims, **characterised in that** the first content by mass is less than or equal to 8%.
